# EUROPEAN PATENT APPLICATION

(11) **EP 4 564 448 A1**
(43) Date of publication of application: **04.06.2025**
(21) Application number: 23846238.6
(22) Date of filing: 12.07.2023
(51) Int. Cl.: H01M 4/13, H01M 4/36

(54) **NONAQUEOUS ELECTROLYTE SECONDARY BATTERY POSITIVE ELECTRODE AND NONAQUEOUS ELECTROLYTE SECONDARY BATTERY**

(30) Priority: 29.07.2022 JP 2022121693
(71) Applicant: Panasonic Energy Co., Ltd., Osaka 570-8511 (JP)
(72) Inventor: SAKITANI, Nobuhiro, Kadoma-shi, Osaka 571-0057 (JP)
(74) Representative: Novagraaf International SA
(86) International application number: PCT/JP2023/025698
(87) International publication number: WO 2024/024507

(57) **Abstract**

A nonaqueous electrolyte secondary battery positive electrode (11) is characterized by comprising a positive electrode current collector (30) and a positive electrode mixture layer (31) disposed on the positive electrode current collector (30), and is characterized in that: the positive electrode current collector (30) has a positive electrode current collector exposed part (30a) in which the positive electrode mixture layer (31) is not disposed; the positive electrode mixture layer (31) has a body part (31a) and an end part (31b) that is provided closer to the positive electrode current collector exposed part (30a) than the body part (31a) is and is thinner than the body part (31a); the body part (31a) contains a positive electrode active material having a unimodal particle size distribution; and the end part (31b) contains a positive electrode active material having a multimodal particle size distribution.

## Description

### TECHNICAL FIELD

The present disclosure relates to a positive electrode for a non-aqueous electrolyte secondary battery and a non-aqueous electrolyte secondary battery.

### BACKGROUND

In recent years, development of a non-aqueous electrolyte secondary battery as a power source for driving hybrid electric vehicles (HEV) or electric vehicles and a power source for power storage has also been rapidly promoted. For such applications, for example, a non-aqueous electrolyte secondary battery having an excellent rate characteristic is desired.

In order to obtain an excellent rate characteristic, it is effective to use a positive-electrode active material composed of the single particles (for example, Patent Literatures 1 and 2). The positive-electrode active material composed of the single particles are rarely crushed even by the pressurization treatment in preparing a positive electrode, a high porosity of the positive electrode mixture layer can be maintained. Consequently, the permeability of the non-aqueous electrolyte into the positive electrode mixture layer is improved, and an excellent rate characteristic is obtained.

However, when positive-electrode active material composed of the single particles is used, foil breakage of the positive electrode may occur at the end portion of the positive electrode mixture layer. This is considered because the positive electrode mixture layer is not compressed by the pressure treatment in preparing the positive electrode, so that the difference in height between the end portion of the positive electrode mixture layer and the positive electrode current collector is not reduced. Since foil breakage of a positive electrode results in reduction of productivity of the battery, it is important to suppress foil breakage of the positive electrode.

### CITATION LIST

### PATENT LITERATURE

Patent Literature 1: JP 2001-243949 A
Patent Literature 2: JP 2004-355824 A

### SUMMARY

An object of the present disclosure is to provide a positive electrode for a non-aqueous electrolyte secondary battery not only suppressed in foil breakage but also having a favorable rate characteristic and a non-aqueous electrolyte secondary battery having the positive electrode.

A positive electrode for a non-aqueous electrolyte secondary battery according to an aspect of the present disclosure is characterized by having a positive electrode current collector and a positive electrode mixture layer disposed on the positive electrode current collector, in which the positive electrode current collector has a positive electrode current collector exposed portion on which the positive electrode mixture layer is not disposed; the positive electrode mixture layer has a body portion and an end portion provided closer to the positive electrode current collector exposed portion than the body portion and thinner than the body portion; the body portion contains a positive-electrode active material having a unimodal particle-size distribution; and the end portion contains a positive-electrode active material having a multimodal particle-size distribution.

Further, a non-aqueous electrolyte secondary battery according to an aspect of the present disclosure is characterized by having a positive electrode for the above non-aqueous electrolyte secondary battery.

According to the present disclosure, it is possible to provide a positive electrode for a non-aqueous electrolyte secondary battery not only suppressed in foil breakage but also having a favorable rate characteristic, and a non-aqueous electrolyte secondary battery having the positive electrode.

### BRIEF DESCRIPTION OF DRAWINGS

FIG. 1 is a schematic cross-sectional view of a non-aqueous electrolyte secondary battery according to an embodiment.
FIG. 2 is a schematic cross-sectional view of a positive electrode according to an embodiment.
FIG. 3 is a schematic plan view of a positive electrode according to an embodiment.
FIG. 4 is a schematic plan view of a positive electrode according to another embodiment.
FIG. 5 is a plan view of a positive electrode according to another embodiment.

### DESCRIPTION OF EMBODIMENTS

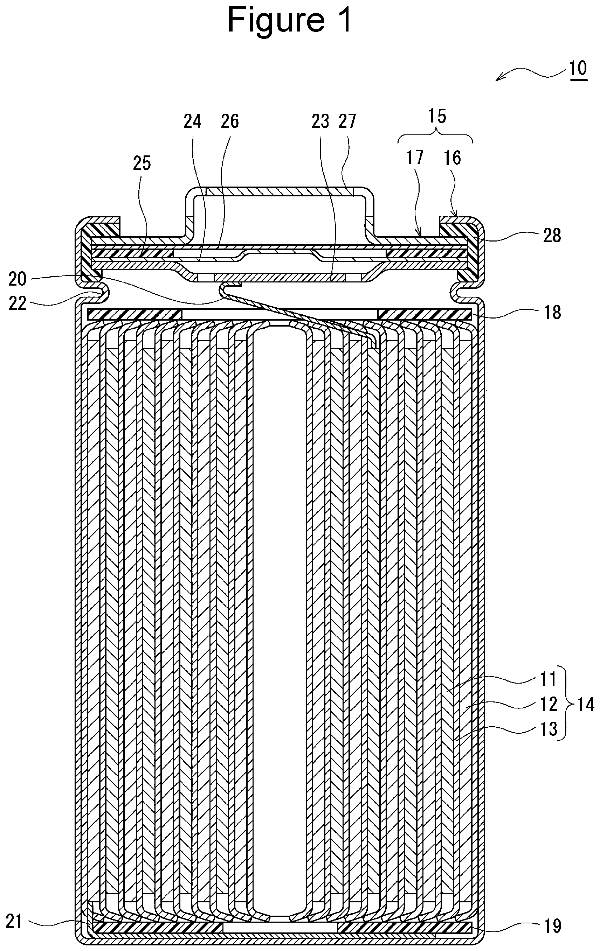

FIG. 1 is a schematic cross-sectional view of a non-aqueous electrolyte secondary battery according to an embodiment. A non-aqueous electrolyte secondary battery 10 shown in FIG. 1 has a rolled electrode assembly 14 formed by rolling a positive electrode 11 and a negative electrode 12 with a separator 13 interposed between them, a non-aqueous electrolyte, insulating plates 18 and 19 disposed on the top and bottom of the electrode assembly 14, respectively, and a battery case 15 housing the above members therein. The battery case 15 is constituted of a case body 16 and a sealing assembly 17 for closing the opening of the case body 16. Note that, in place of the rolled electrode assembly 14, another type of electrode assembly, such as a laminated electrode assembly obtained by alternately stacking positive electrodes and negative electrodes with a separator interposed between them, may be applied. The battery case 15 is not limited to a cylindrical metal case and may be, e.g., a square, a coin or a button metal case or a resin case (so-called laminate case) formed by stacking resin sheets.

The non-aqueous electrolyte contains, for example, a non-aqueous solvent and an electrolyte salt dissolved in the non-aqueous solvent. Examples of the non-aqueous solvent include esters, ethers, nitriles, amides, and a mixed solvent of two or more types of these. The non-aqueous solvent may contain a halogen-substituted product obtained by substituting at least a hydrogen of these solvents with a halogen atom such as fluorine. Examples of the electrolyte salt include lithium salts such as LiPF₆. Note that the non-aqueous electrolyte is not limited to a liquid electrolyte, and may be a solid electrolyte such as a gel-like polymer.

The case body 16 is, for example, a cylindrical metal container with a bottom. A gasket 28 is provided between the case body 16 and the sealing assembly 17 to ensure airtightness within the battery. The case body 16 has a projecting portion 22, which is a partly and inwardly projecting side surface, and supports the sealing assembly 17. The projecting portion 22 is preferably formed like a ring along the circumference direction of the case body 16, and supports the sealing assembly 17 by the upper surface thereof.

The sealing assembly 17 has a structure formed by stacking a filter 23, a lower vent member 24, an insulating member 25, an upper vent member 26, and a cap 27 sequentially from the electrode assembly 14. Individual members constituting the sealing assembly 17 has, for example, a disk shape or a ring shape, and are electrically connected to each other except the insulating member 25. The lower vent member 24 and the upper vent member 26 are mutually connected at the middle portions of them, and the insulating member 25 is sandwiched by the circumferential edge portions of them. When heat generates due to, e.g., an internal short circuit and increases the internal pressure of the non-aqueous electrolyte secondary battery 10, for example, the lower vent member 24 pushes up the upper vent member 26 toward the cap 27, deforms and breaks, to cut off the current path between the lower vent member 24 and the upper vent member 26. When the internal pressure further increases, the upper vent member 26 breaks, and gas is discharged through the opening of the cap 27.

In the non-aqueous electrolyte secondary battery 10 shown in FIG. 1, a positive electrode lead 20 attached to the positive electrode 11 extends through a through-hole of the insulating plate 18 toward the sealing assembly 17, whereas a negative electrode lead 21 attached to the negative electrode 12 passes through the outside of the insulating plate 19 and extends toward the bottom of the case body 16. The positive electrode lead 20 is connected to the lower surface of the filter 23, i.e., the bottom plate of the sealing assembly 17, by, e.g., welding, and the cap 27, i.e., the top plate of the sealing assembly 17, electrically connected to the filter 23, serves as a positive electrode terminal. The negative electrode lead 21 is connected to the inner surface of the bottom of the case body 16 by, e.g., welding, and the case body 16 serves as a negative electrode terminal.

Hereinafter, the positive electrode 11, the negative electrode 12, and the separator 13 will be described in detail.

### [Positive Electrode]

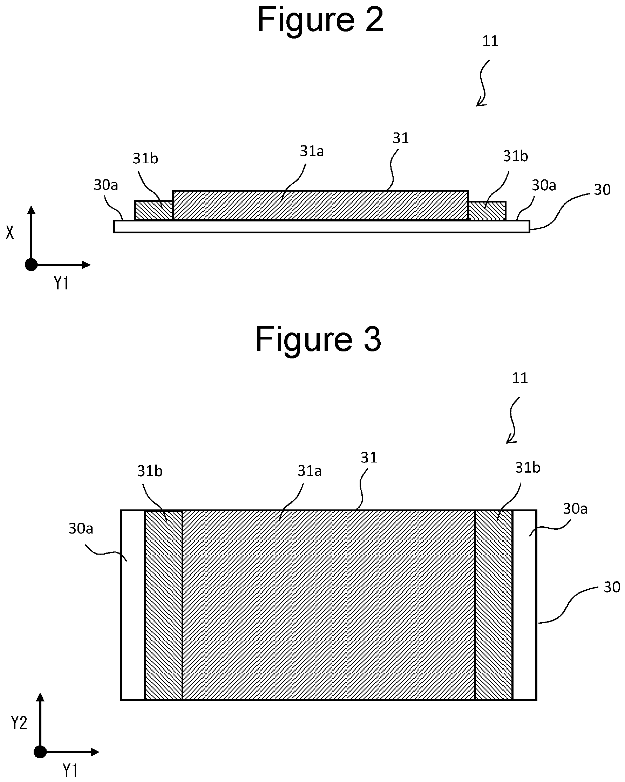

FIG. 2 is a schematic cross-sectional view of a positive electrode according to an embodiment, and FIG. 3 is a schematic plan view of a positive electrode according to an embodiment. FIGs. 2 and 3 each illustrate the state of the positive electrode 11 before it is rolled up in the form of the electrode assembly 14. In FIGs. 2 and 3, an arrow X in FIG. 2 indicates the thickness direction of the positive electrode 11. An arrow Y1 perpendicular to the arrow X of FIG. 2 indicates the direction along which the positive electrode 11 is rolled when the electrode assembly 14 is produced, that is, the longitudinal direction of the positive electrode 11 (or a longitudinal direction of a positive electrode current collector or a positive electrode mixture layer described later). An arrow Y2 perpendicular to the arrow Y1 in FIG. 3 indicates the direction of the axis around which the positive electrode 11 is rolled, that is, a shorter length direction of the positive electrode 11 (or a shorter length direction of a positive electrode current collector or a positive electrode mixture layer described later).

As shown in FIG. 2, the positive electrode 11 has a positive electrode current collector 30 and a positive electrode mixture layer 31 disposed on the positive electrode current collector 30. As the positive electrode current collector 30, e.g., foil of a metal such as aluminum, which is stable in a potential range of the positive electrode 11, or a film having such a metal disposed on the surface layer, can be used. The positive electrode current collector 30 has a portion (hereinafter, referred to as a positive electrode current collector exposed portion 30a) where the positive electrode mixture layer 31 is not disposed thereon and the positive electrode current collector 30 is exposed. In the positive electrode 11 shown in FIGs. 2 and 3, the positive electrode current collector exposed portion 30a is provided to both end portions of the positive electrode 11 in the longitudinal direction but not limited thereto. The positive electrode current collector exposed portion 30a may be provided to either one of the end portions of the positive electrode 11 in the longitudinal direction.

The positive electrode mixture layer 31 contains, e.g., a positive-electrode active material, a binding agent, and a conductive agent. The positive electrode mixture layer 31 may be provided on one or both surfaces of the positive electrode current collector 30, as shown in FIG. 2.

The positive electrode mixture layer 31 has a body portion 31a and an end portion 31b, which is provided closer to the positive electrode current collector exposed portion 30a than the body portion 31a and thinner than the body portion 31a. In the positive electrode 11 shown in FIGs. 2 and 3, the end portion 31b is provided to both end portions of the positive electrode mixture layer 31 in the longitudinal direction, but is not limited to this. The end portion may be provided to either one of the end portions of the positive electrode 11 in the longitudinal direction. The thickness of the body portion 31a is, for example, 10 to 200 µm. The thickness of the end portion 31b is preferably thinner, for example, by 5 to 20 µm than the thickness of the body portion 31a.

With respect to the positive-electrode active material contained in the positive electrode mixture layer 31, the body portion 31a contains a positive-electrode active material having a unimodal particle-size distribution, whereas the end portion 31b contains a positive-electrode active material having a multimodal particle-size distribution. The particle-size distribution measurement is performed by a laser diffraction scattering method. More specifically, a particle-size distribution is measured in a dry system, i.e., in air, and the abundance ratio of particles per diameter is determined on a volume basis. In the present embodiment, a frequency distribution is used, which represents a particle-size distribution obtained by this measurement as a frequency. The frequency distribution is a histogram or a curve obtained by plotting the particle diameter (µm) on a common logarithmic scale used as the horizontal axis and the frequency (%) on the vertical axis.

The positive-electrode active material having a unimodal particle-size distribution and contained in the body portion 31a is preferably constituted of, for example, particles of a positive-electrode active material having a particle-size distribution having a single peak in a particle size range of 0.5 to 30 µm. The positive-electrode active material having a multimodal particle-size distribution and contained in the end portion 31b is preferably a positive-electrode active material having a bimodal particle-size distribution, more specifically constituted of particles of a positive-electrode active material having a bimodal particle-size distribution having a first-section peak in the particle-size range of 0.5 to 15 µm and a second-section peak in the particle-size range of 5 to 30 µm.

When the positive electrode 11 is produced, a coating film (positive electrode mixture layer) is rolled while applying a predetermined pressure by a roller or the like, as described later. Here, in the body portion 31a containing a positive-electrode active material having the unimodal particle-size distribution, since the particles of positive-electrode active material exhibiting the unimodal particle-size distribution are rarely crushed even when rolled by a roller or the like, the body portion 31a can maintain a high porosity. As a result, the permeability of the non-aqueous electrolyte into the positive electrode mixture layer 31 becomes favorable, and an excellent rate characteristic is conceivably obtained. In contrast, in the end portion 31b containing the positive-electrode active material having the multimodal particle-size distribution, when rolled by a roller or the like, the particles of the positive-electrode active material having the multimodal particle-size distribution are deformed, with the result that the porosity of the end portion 31b decreases. More specifically, the end portion 31b is compressed by rolling of a roller or the like to reduce the difference in height between the end portion 31b of the positive electrode mixture layer 31 and the positive electrode current collector exposed portion 30a of the positive electrode current collector 30. For this reason, it is considered that foil breakage of the positive electrode 11 is suppressed.

The positive-electrode active material having a unimodal particle-size distribution and contained in the body portion 31a may be constituted of non-aggregated particles composed of the single particles or aggregated particles composed of secondary particles obtained by aggregation of primary particles. However, in view of obtaining a more favorable rate characteristic, non-aggregated particles having a volume-base median diameter (D50) of, for example, 2 to 10 µm are preferably used.

The positive-electrode active material having a multimodal particle-size distribution and contained in the end portion 31b may be constituted of non-aggregated particles composed of the single particles or aggregated particles composed of secondary particles obtained by aggregation of primary particles, but, in view of further suppressing foil breakage, is preferably constituted of aggregated particles composed of secondary particles obtained by aggregation of primary particles having an average particle size of 50 nm to 5 µm, and having a volume-base median diameter (D50) of 10 to 30 µm.

The non-aggregated particles composed of the single particles refer to the particles in which grain boundaries of primary particles cannot be confirmed when observed by a scanning electron microscope (SEM) with an appropriate magnification. In contrast, in the case of aggregated particles composed of secondary particles obtained by aggregation of primary particles, the grain boundary of the primary particle is confirmed in the cross section thereof observed by SEM. The particle size of the primary particle is measured as the Feret's diameter (of primary particle) in a region surrounded by the grain boundary in the SEM image of the secondary-particle cross-section. The average particle size of the primary particles is determined by averaging the particle sizes of 100 primary particles. In addition, the volume-base median diameter (D50) of the non-aggregated particles (the single particles) and the aggregated particles (secondary particles) means a particle size at which the cumulative frequency in the volume-base particle-size distribution is 50% from the smallest particle size.

The positive-electrode active material having a multimodal particle-size distribution and contained in the end portion 31b is a positive-electrode active material having a bimodal particle-size distribution. In view of more effectively suppressing foil breakage, the maximum value of one of the peaks in the bimodal particle-size distribution is preferably 1.5 times or more the maximum value of the other peak.

The positive-electrode active material contained in the body portion 31a is preferably a positive-electrode active material having a unimodal particle-size distribution alone but may contain a positive-electrode active material having a multimodal particle-size distribution as long as the effect of the present embodiment is not impaired. The content of the positive-electrode active material having a multimodal particle-size distribution and contained in the body portion 31a is preferably 10 mass% or less, and more preferably 5 mass% or less based on the total mass of the positive-electrode active material contained in the body portion 31a.

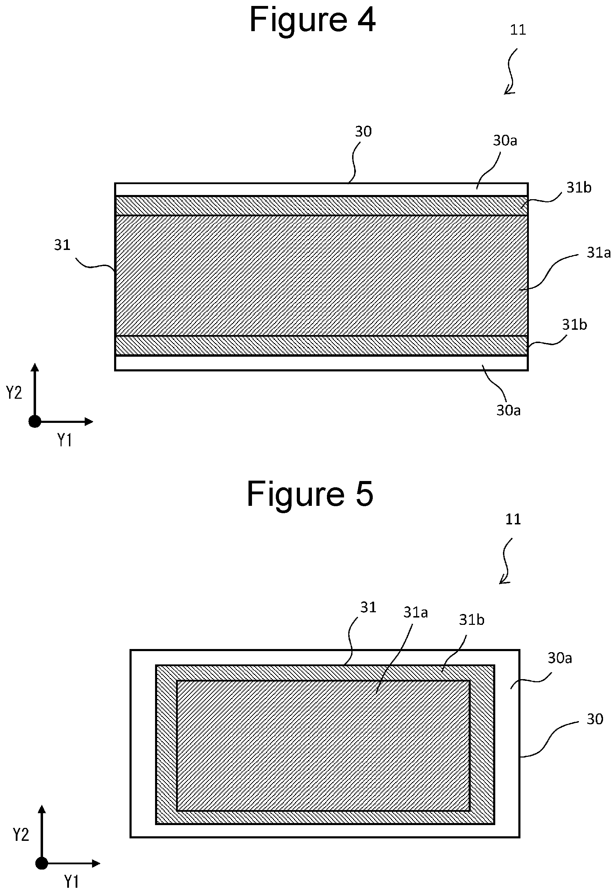

FIGs. 4 and 5 illustrate cross-sectional views of positive electrodes according to other embodiments. The positive electrode 11 shown in FIGs. 4 and 5 indicates the state before being rolled up in the form of the electrode assembly 14. Arrows Y1 and Y2 shown in FIGs. 4 and 5 indicate the same directions as mentioned above.

In the positive electrode 11 shown in FIG. 4, the positive electrode current collector exposed portion 30a is provided to both end portions of the positive electrode 11 in the lateral shorter length direction. The positive electrode current collector exposed portion 30a may be provided to either one of the end portions of the positive electrode 11 in the shorter length direction. Further, in the positive electrode 11 shown in FIG. 4, the end portion 31b, which is provided closer to the positive electrode current collector exposed portion 30a than the body portion 31a and thinner than the body portion 31a, is provided to both end portions of the positive electrode mixture layer 31 in the shorter length direction. The end portion 31b may be provided to either one of the end portions of the positive electrode mixture layer 31 in the shorter length direction. Also, in such an aspect, similarly to the above, not only suppression of foil breakage but also a favorable rate characteristic both can be achieved.

Further, in the positive electrode 11 shown in FIG. 5, the positive electrode current collector exposed portion 30a is provided to both end portions of the positive electrode 11 in the longitudinal direction and both end portions of the positive electrode 11 in the shorter length direction. Note that, the positive electrode current collector exposed portion 30a may be provided to either one of the end portions of the positive electrode 11 in the longitudinal direction, or to either one of the end portions of the positive electrode 11 in the shorter length direction. Further, in the positive electrode 11 shown in FIG. 5, the end portion 31b, which is provided closer to the positive electrode current collector exposed portion 30a than the body portion 31a and thinner than the body portion 31a, is provided to both end portions of the positive electrode mixture layer 31 in the longitudinal direction and to both end portions of the positive electrode mixture layer 31 in the shorter length direction. The end portion 31b may be provided to either one of the end portions of the positive electrode mixture layer 31 in the longitudinal direction, or to either one of the end portions of the positive electrode mixture layer 31 in the shorter length direction. Even in such a configuration, similarly to the above, not only foil breakage but also a favorable rate characteristic can be achieved.

The positive-electrode active materials contained in the body portion 31a and the end portion 31b may have the same composition or different compositions. Examples of the positive-electrode active material contained in the body portion 31a and the end portion 31b include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used alone or as a mixture of a plurality of types. The positive-electrode active material preferably contains a lithium nickel composite oxide such as LiₓNiO₂, LiₓCo_{y}Ni_{1-y}O₂, or LiₓNi_{1-y}M_{y}O_{z} (M represents at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3) in view of achieving the high capacity of the non-aqueous electrolyte secondary battery.

Examples of the conductive agent to be contained in the positive electrode mixture layer 31 include carbon-based particles such as carbon black (CB), acetylene black (AB), Ketjenblack, carbon nanotubes (CNT), graphene, and graphite. These may be used alone or in combination of two types or more.

Examples of the binding agent to be contained in the positive electrode mixture layer 31 include fluororesins such as polytetrafluoroethylene (PTFE) and polyvinylidene fluoride (PVDF), polyacrylonitrile (PAN), polyimide, an acrylic resin, and polyolefin. These resins may be used in combination with a cellulose derivative such as carboxymethyl cellulose (CMC) or its salt, or polyethylene oxide (PEO).

A method of producing the positive electrode 11 will be described. First, a positive-electrode active material having a unimodal particle-size distribution, a binding material, and a conductive agent, etc., are mixed to produce a positive-electrode mixture slurry for the body portion. In addition, a positive-electrode active material having a multimodal particle-size distribution, a binding material and a conductive agent, etc., are mixed to produce a positive-electrode mixture slurry for an end portion. Then, the positive-electrode mixture slurry for the body portion and the positive-electrode mixture slurry for the end portion are applied to predetermined positions of the positive electrode current collector 30. More specifically, the end portion of the positive electrode current collector 30 is determined as the positive electrode current collector exposed portion 30a. To the positive electrode current collector 30 inside the positive electrode current collector exposed portion 30a, the positive-electrode mixture slurry for the end portion is applied. To the positive electrode current collector 30 inside the portion to which the positive-electrode mixture slurry for the end portion is to be applied, the positive-electrode mixture slurry for the body portion is applied. Then, after these slurries are applied, the coating films are dried, and rolled by a roller or the like. In this manner, the positive electrode 11 of the present embodiment can be prepared. Note that the end portion 31b of the positive electrode mixture layer 31 is compressed by rolling by a roller or the like. Accordingly, if the thickness of the coating film of the positive-electrode mixture slurry for the body portion and the thickness of the coating film of the positive-electrode mixture slurry for the end portion are substantially the same, the end portion 31b thinner than the body portion 31a can be formed by rolling a roller or the like.

### [Negative Electrode]

The negative electrode 12 has a negative electrode current collector and a negative electrode mixture layer provided on the surface of the negative electrode current collector. The negative electrode current collector to be used can be, for example, a foil of a metal, such as copper, that is stable in a potential range of the negative electrode 12 or a film having such a metal disposed on the surface layer thereof. The negative electrode mixture layer contains a negative electrode active material and a binding material, and is preferably provided on both surfaces of the negative electrode current collector excluding, for example, a portion to which, the negative electrode lead 21 is connected. The negative electrode 12 can be produced, for example, by applying a negative-electrode mixture slurry containing, e.g., a negative electrode active material and a binder onto a surface of a negative electrode current collector, drying the coating film, and then rolling the film to form a negative electrode mixture layer on both surfaces of the negative electrode current collector.

The negative electrode mixture layer contains, for example, a carbon-based active material that reversibly occludes and releases lithium ions as a negative electrode active material. A suitable carbon-based active material is graphite including natural graphite such as flake graphite, massive graphite, and earthy graphite and artificial graphite such as massive artificial graphite (MAG) and graphitized mesophase-carbon microbead (MCMB). As the negative electrode active material, a Si-based active material composed of at least one of Si or a Si-containing compound may be used, or a carbon-based active material and a Si-based active material may be used in combination.

As the binder to be contained in the negative electrode mixture layer, e.g., a fluororesin, PAN, a polyimide, an acrylic resin, or a polyolefin can be used similarly to the case of the positive electrode 11, but styrene-butadiene rubber (SBR) is preferably used. It is preferable that the negative electrode mixture layer further contain, e.g., CMC or its salt, polyacrylic acid (PAA) or its salt, or polyvinyl alcohol (PVA). Of them, CMC or its salt, or PAA or its salt is preferably used in combination with SBR.

### [Separator]

As the separator 13, for example, a porous sheet having an ion permeation property and an insulation property is used. Specific examples of the porous sheet include fine porous thin films, woven fabrics, and nonwoven fabrics. As a material of the separator 13, e.g., polyolefin such as polyethylene and polypropylene, and cellulose are suitable. The separator 13 may be formed of either a single-layered structure or a laminate structure. On the surface of the separator, e.g., a heat-resistant layer may be formed.

### EXAMPLES

Hereinafter, the present disclosure will be further described with reference to Examples. However, the present disclosure is not limited to these Examples.

### <Example 1>

### [Production of Positive Electrode]

A positive-electrode active material A (unimodal × non-aggregated), which is constituted of non-aggregated particles having a unimodal particle-size distribution exhibiting a single peak in a particle size range of 1 to 10 µm and having a volume-base median diameter (D50) of 5 µm, carbon black, and polyvinylidene fluoride (PVDF) were mixed in a solid-content mass ratio of 98 : 1 : 1, and further an appropriate amount of N-methyl-2-pyrrolidone (NMP) was added thereto. The resultant mixture was kneaded to produce a positive-electrode mixture slurry for the body portion. The composition of positive-electrode active material A is Li₂Ni_{0.8}Co_{0.1}Mn_{0.1}.

Positive-electrode active material B (bimodal × secondary particles), which has a bimodal particle-size distribution exhibiting a first-section peak in a particle diameter range of 1 to 10 µm and a second-section peak in a particle diameter range of 6 to 20 µm and which is constituted of aggregated particles composed of secondary particles obtained by aggregation of primary particles and having a volume-base median diameter (D50) of 8.2 µm, carbon black, and polyvinylidene fluoride (PVDF) were mixed in a solid-content mass ratio of 98 : 1 : 1, and further an appropriate amount of N-methyl-2-pyrrolidone (NMP) was added thereto. The mixture was kneaded to produce a positive-electrode mixture slurry for an end portion. The composition of positive-electrode active material B is Li₂Ni_{0.8}Co_{0.1}Mn_{0.1}.

The positive-electrode mixture slurry for a body portion and the positive-electrode mixture slurry for an end portion were applied to predetermined positions of a positive electrode current collector formed of aluminum foil to produce the positive electrode shown in FIG. 3. Specifically, both end portions of the positive electrode current collector formed of aluminum foil in the longitudinal direction were determined as a positive electrode current collector exposed portion (width: 20 mm), and the region of the positive electrode current collector inside the positive electrode current collector exposed portion was determined as a slurry application region. To both end portions of this slurry application region in the longitudinal direction, a positive-electrode mixture slurry for the end portion was applied so as to obtain a width of 5 mm × a thickness of 100 µm. To the remaining slurry application region to which the positive-electrode mixture slurry for the end portion was not applied, a positive-electrode mixture slurry for the body portion was applied so as to obtain a thickness of 105 µm. After slurries were applied, the coating film was dried, and rolled at a pressure of 30,000 N/cm by a roller. In this way, the positive electrode shown in FIG. 3 was obtained. When the cross section of the obtained positive electrode was observed, it was confirmed that the end portion of the positive electrode mixture layer was thinner than the body portion. The same applied to all of the following Examples.

### [Production of Negative Electrode]

Natural graphite as a negative electrode active material, sodium carboxymethylcellulose (CMC-Na), and styrene-butadiene rubber (SBR) were mixed so as to satisfy a solid-content mass ratio of 100: 1: 1 in an aqueous solution to prepare a negative-electrode mixture slurry. The negative-electrode mixture slurry was applied onto a negative electrode current collector formed of copper foil. The coating film was dried, and rolled by a roller to obtain a negative electrode.

### [Production of Non-Aqueous Electrolyte]

Lithium hexafluorophosphate (LiPF₆) was dissolved in a mixed solvent containing ethylene carbonate (EC), ethyl methyl carbonate (EMC), and diethyl carbonate (DMC) in a volume ratio of 3: 3: 4 so as to obtain 1.0 mol/liter, to prepare a non-aqueous electrolyte.

### [Preparation of Battery]

An aluminum lead was attached to the current collector exposed part of the above positive electrode, whereas a nickel lead was attached to the above negative electrode, and then the positive electrode and the negative electrode were spirally rolled with a separator composed of polyolefin interposed between them to prepare an electrode assembly. The electrode assembly was housed in a case formed of an aluminum laminate sheet. After the above non-aqueous electrolyte was injected, the opening of the case was sealed to obtain a non-aqueous electrolyte secondary battery.

### <Example 2>

A non-aqueous electrolyte secondary battery was produced in the same manner as in Example 1 except that the positive-electrode mixture slurry for the body portion was prepared using positive-electrode active material C (unimodal × not aggregated), which has a unimodal particle-size distribution exhibiting a single peak in a particle diameter range of 1 to 10 µm and which is constituted of non-aggregated particles having a volume-base median diameter (D50) of 4.5 µm, and a positive-electrode mixture slurry for an end portion was prepared using positive-electrode active material D (bimodal × secondary particles), which has a bimodal particle-size distribution having a first-section peak in the particle-size range of 4 to 20 µm and a second-section peak in the particle-size range of 10 to 30 µm and which is constituted of aggregated particles composed of secondary particles obtained by aggregation of primary particles of 100 nm in average particle diameter, and having a volume-base median diameter (D50) of 20 µm. The composition of positive-electrode active material C is Li₂Ni_{0.8}Co_{0.1}Mn_{0.1}, and the composition of positive-electrode active material D is Li₂Ni_{0.8}Co_{0.1}Mn_{0.1}.

### <Comparative Example 1>

A non-aqueous electrolyte secondary battery was produced in the same manner as in Example 1 except that the positive-electrode mixture slurry for the end portion was prepared using positive-electrode active material A (monomodal × not aggregated).

### <Comparative Example 2>

A non-aqueous electrolyte secondary battery was produced in the same manner as in Example 1 except that the positive-electrode mixture slurry for the body portion was prepared using positive-electrode active material B (bimodal × secondary particles).

### <Comparative Example 3>

A non-aqueous electrolyte secondary battery was produced in the same manner as in Example 1 except that the positive-electrode mixture slurry for the body portion was prepared using positive-electrode active material B (bimodal × secondary particles), and the positive-electrode mixture slurry for the end portion was prepared using positive-electrode active material A (unimodal × not aggregated).

### <Comparative Example 4>

A non-aqueous electrolyte secondary battery was produced in the same manner as in Example 1 except that the positive-electrode mixture slurry for the body portion was prepared using positive-electrode active material D (bimodal × secondary particles), and the positive-electrode mixture slurry for the end portion was prepared using positive-electrode active material C (unimodal × not aggregated).

### <Example 3>

A non-aqueous electrolyte secondary battery was produced in the same manner as in Example 1 except that the positive-electrode mixture slurry for the body portion and a positive-electrode mixture slurry for an end portion were applied to predetermined positions of a positive electrode current collector formed of aluminum foil to produce the positive electrode shown in FIG. 4. More specifically, both end portions of the positive electrode current collector formed of aluminum foil in the shorter length direction were determined as the positive electrode current collector exposed portion, and the region of the positive electrode current collector inside the positive electrode current collector exposed portion was determined as the slurry application region. The positive-electrode mixture slurry for the end portion was applied to both end portions of the slurry application region in the shorter length direction. To the remaining slurry application region to which the positive-electrode mixture slurry for the end portion was not applied, the positive-electrode mixture slurry for the body portion was applied. After the slurries were applied, the coating film was dried, and rolled by a roller. In this way, the positive electrode shown in FIG. 4 was obtained.

### <Example 4>

A non-aqueous electrolyte secondary battery was produced in the same manner as in Example 3 except that the positive-electrode mixture slurry for the body portion was prepared using positive-electrode active material C (unimodal × not aggregated), and the positive-electrode mixture slurry for the end portion was prepared using positive-electrode active material D (bimodal × secondary particles).

### <Comparative Example 5>

A non-aqueous electrolyte secondary battery was produced in the same manner as in Example 3 except that the positive-electrode mixture slurry for the end portion was prepared using positive-electrode active material A (unimodal × not aggregated).

### <Comparative Example 6>

A non-aqueous electrolyte secondary battery was produced in the same manner as in Example 3 except that the positive-electrode mixture slurry for the body portion was prepared using positive-electrode active material B (bimodal × secondary particles).

### <Comparative Example 7>

A non-aqueous electrolyte secondary battery was produced in the same manner as in Example 3 except that the positive-electrode mixture slurry for the body portion was prepared using positive-electrode active material B (bimodal × secondary particles), and the positive-electrode mixture slurry for the end portion was prepared using positive-electrode active material A (unimodal × not aggregated).

### <Comparative Example 8>

A non-aqueous electrolyte secondary battery was produced in the same manner as in Example 3 except that the positive-electrode mixture slurry for the body portion was prepared using positive-electrode active material D (bimodal × secondary particles) and the positive-electrode mixture slurry for the end portion was prepared using positive-electrode active material C (unimodal × not aggregated).

### [Evaluation of Foil Breakage]

**In** the production of the positive electrodes of Examples and Comparative Examples, the state of the positive electrode after rolling by a roller was visually confirmed to evaluate the presence or absence of foil breakage of the positive electrode. The number of test samples was 100. The results are summarized in Table 1.

### [Evaluation of Rate Characteristic]

Each of the non-aqueous electrolyte secondary batteries of Examples and Comparative Examples was charged at a constant current of 0.2 C under a temperature environment of 25°C. When the battery voltage reached 4.2 V, constant-voltage charge was performed until the current value reached 0.01 mA or less. Subsequently, 0.2 C constant-current discharge was performed until the battery voltage reached 2.5 V. At this time, the capacity was measured (0.2 C discharged capacity). After charge was performed in the same manner as above, 1.0 C constant-current discharge was performed until the battery voltage reached 2.5 V. At this time, the capacity was measured (1.0 C discharged capacity). Subsequently, a rate characteristic was calculated by the following equation. The results are summarized in Table 1. Rate characteristic (%) = (1.0 C discharged capacity/0.2 C discharged capacity) × 100

**[Table 1]**

| | Position of end portion in positive electrode mixture layer | Positive-electrode active material | | Foil breakage | Rate characteristic |
|---|---|---|---|---|---|
| | | Body portion | End portion | | |
| Example 1 | Both ends in longitudinal direction | A (unimodal × not aggregated) | B (bimodal × secondary particle) | 0/100 | 87% |
| Example 2 | Both ends in longitudinal direction | C (unimodal × not aggregated) | D (bimodal × secondary particles) | 0/100 | 84% |
| Comparative Example 1 | Both ends in longitudinal direction | A (unimodal × not aggregated) | A (unimodal × not aggregated) | 2/100 | 88% |
| Comparative Example 2 | Both ends in longitudinal direction | B (bimodal × secondary particle) | B (bimodal × secondary particle) | 0/100 | 73% |
| Comparative Example 3 | Both ends in longitudinal direction | B (bimodal × secondary particle) | A (unimodal × not aggregated) | *5*/*100* | 74% |
| Comparative Example 4 | Both ends in longitudinal direction | D (bimodal × secondary particles) | C (unimodal × not aggregated) | 4/100 | 76% |
| Example 3 | Both ends in shorter length direction | A (unimodal × not aggregated) | B (bimodal × secondary particle) | 0/100 | 90% |
| Example 4 | Both ends in shorter length direction | C (unimodal × not aggregated) | D (bimodal × secondary particles) | 0/100 | 87% |
| Comparative Example 5 | Both ends in shorter length direction | A (unimodal × not aggregated) | A (unimodal × not aggregated) | 3/100 | 92% |
| Comparative Example 6 | Both ends in shorter length direction | B (bimodal × secondary particle) | B (bimodal × secondary particle) | 0/100 | 77% |
| Comparative Example 7 | Both ends in shorter length direction | B (bimodal × secondary particle) | A (unimodal × not aggregated) | 4/100 | 89% |
| Comparative Example 8 | Both ends in shorter length direction | D (bimodal × secondary particles) | C (unimodal × not aggregated) | 3/100 | 81% |

As shown in Table 1, in all of Examples 1 to 4, no foil breakage of the positive electrode occurred, and an excellent rate characteristic was exhibited. In contrast, Comparative Examples 1, 5, 7, and 8 exhibited an excellent rate characteristic, but foil breakage of the positive electrode occurred. In Comparative Examples 2 and 6, foil breakage of the positive electrode was suppressed, but the rate characteristic was as low as less than 80%.

### <Example 5>

A non-aqueous electrolyte secondary battery was produced in the same manner as in Example 1 except that a positive-electrode mixture slurry for an end portion was prepared using positive-electrode active material E (bimodal × non-aggregated), which has a bimodal particle-size distribution exhibiting a first-section peak in a particle size range of 1 to 7 µm and a second-section peak in a particle size range of 2 to 10 µm, and which is constituted of non-aggregated particles having a volume-base median diameter (D50) of 4 µm. Note that the composition of positive-electrode active material E is Li₂Ni_{0.8}Co_{0.1}Mn_{0.1}.

### <Example 6>

A non-aqueous electrolyte secondary battery was produced in the same manner as in Example 1 except that the positive-electrode mixture slurry for the body portion was prepared using positive-electrode active material F (unimodal × secondary particles), which has a unimodal particle-size distribution exhibiting a single peak in a particle size range of 7 to 20 µm, and which is constituted of aggregated particles composed of secondary particles obtained by aggregation of primary particles of 100 nm in average particle diameter, and having a volume-base median diameter (D50) of 13 µm, and the positive-electrode mixture slurry for an end portion was prepared using positive-electrode active material E (bimodal × non-aggregated). The composition of positive-electrode active material F is Li₂Ni_{0.8}Co_{0.1}Mn_{0.1}.

### <Example 7>

A non-aqueous electrolyte secondary battery was produced in the same manner as in Example 1 except that the positive-electrode mixture slurry for the body portion was prepared using positive-electrode active material F (unimodal × secondary particles).

### <Comparative Example 9>

A non-aqueous electrolyte secondary battery was produced in the same manner as in Example 1 except that the positive-electrode mixture slurry for the end portion was prepared using positive-electrode active material F (unimodal × secondary particles).

### <Comparative Example 10>

A non-aqueous electrolyte secondary battery was produced in the same manner as in Example 1 except that the positive-electrode mixture slurry for the body portion was prepared using positive-electrode active material F (unimodal × secondary particles), and the positive-electrode mixture slurry for the end portion was prepared using positive-electrode active material A (unimodal × not aggregated).

### <Comparative Example 11>

A non-aqueous electrolyte secondary battery was produced in the same manner as in Example 1 except that the positive-electrode mixture slurry for the body portion was prepared using positive-electrode active material E (bimodal × not aggregated), and the positive-electrode mixture slurry for the end portion was prepared using positive-electrode active material A (unimodal × not aggregated).

### <Comparative Example 12>

A non-aqueous electrolyte secondary battery was produced in the same manner as in Example 1 except that the positive-electrode mixture slurry for the body portion was prepared using positive-electrode active material E (bimodal × not aggregated), and the positive-electrode mixture slurry for the end portion was prepared using positive-electrode active material F (unimodal × secondary particles).

### <Comparative Example 13>

A non-aqueous electrolyte secondary battery was produced in the same manner as in Example 1 except that the positive-electrode mixture slurry for the body portion was prepared using positive-electrode active material E (bimodal × not aggregated).

### <Comparative Example 14>

A non-aqueous electrolyte secondary battery was produced in the same manner as in Example 1 except that the positive-electrode mixture slurry for the body portion was prepared using positive-electrode active material B (bimodal × secondary particles), and the positive-electrode mixture slurry for the end portion was prepared using positive-electrode active material F (unimodal × secondary particles).

### <Comparative Example 15>

A non-aqueous electrolyte secondary battery was produced in the same manner as in Example 1 except that the positive-electrode mixture slurry for the body portion was prepared using positive-electrode active material B (bimodal × secondary particles), and the positive-electrode mixture slurry for the end portion was prepared using positive-electrode active material E (bimodal × not aggregated).

In Examples 5 to 7 and Comparative Examples 9 to 15, foil breakage and rate characteristic were evaluated. The results are summarized in Table 2.

**[Table 2]**

| | Position of end portion in positive electrode mixture layer | Positive-electrode active material | | Foil breakage | Rate characteristic |
|---|---|---|---|---|---|
| | | Body portion | End portion | | |
| Example 5 | Both ends in longitudinal direction | A (unimodal × not aggregated) | E (bimodal × not aggregated) | 0/100 | 88% |
| Example 6 | Both ends in longitudinal direction | F (unimodal × secondary particle) | E (bimodal × not aggregated) | 0/100 | 83% |
| Example 7 | Both ends in longitudinal direction | F (unimodal × secondary particle) | B (bimodal × secondary particle) | 0/100 | 84% |
| Comparative Example 9 | Both ends in longitudinal direction | A (unimodal × not aggregated) | F (unimodal × secondary particle) | 2/100 | 87% |
| Comparative Example 10 | Both ends in longitudinal direction | F (unimodal × secondary particle) | A (unimodal × not aggregated) | *5*/*100* | 83% |
| Comparative Example 11 | Both ends in longitudinal direction | E (bimodal × not aggregated) | A (unimodal × not aggregated) | 4/100 | 75% |
| Comparative Example 12 | Both ends in longitudinal direction | E (bimodal × not aggregated) | F (unimodal × secondary particle) | 2/100 | 74% |
| Comparative Example 13 | Both ends in longitudinal direction | E (bimodal × not aggregated) | B (bimodal × secondary particle) | 0/100 | 75% |
| Comparative Example 14 | Both ends in longitudinal direction | B (bimodal × secondary particle) | F (unimodal × secondary particle) | 3/100 | 71% |
| Comparative Example 15 | Both ends in longitudinal direction | B (bimodal × secondary particle) | E (bimodal × not aggregated) | 0/100 | 72% |

As shown in Table 2, in all of Examples 5 to 7, no foil breakage of the positive electrode occurred, and an excellent rate characteristic was exhibited. In contrast, in Comparative Examples 9 to 15, foil breakage of the positive electrode occurred or even if foil breakage of the positive electrode was suppressed, the rate characteristic was as low as less than 80%.

From the results of these Examples and Comparative Examples, it is found that not only suppression of foil breakage of the positive electrode but also an excellent rate characteristic can be achieved since the body portion of the positive electrode mixture layer contains a positive-electrode active material having a unimodal particle-size distribution and the end portion thereof, which is provided closer to the positive electrode current collector exposed portion than the body portion, and thinner than the body portion contains a positive-electrode active material having a multimodal particle-size distribution.

### [Supplementary Notes]

(1) A positive electrode for a non-aqueous electrolyte secondary battery including
   a positive electrode current collector, and a positive electrode mixture layer disposed on the positive electrode current collector, in which
   the positive electrode current collector has a positive electrode current collector exposed portion on which the positive electrode mixture layer is not disposed, and
   the positive electrode mixture layer has a body portion and an end portion provided closer to the positive electrode current collector exposed portion than the body portion and thinner than the body portion, the body portion contains a positive-electrode active material having a unimodal particle-size distribution, and the end portion contains a positive-electrode active material having a multimodal particle-size distribution.
(2) The positive electrode for a non-aqueous electrolyte secondary battery according to (1), in which the positive-electrode active material having the unimodal particle-size distribution and contained in the body portion is constituted of non-aggregated particles composed of the single particles or aggregated particles composed of secondary particles obtained by aggregation of primary particles, and the positive-electrode active material having the multimodal particle-size distribution and contained in the end portion is constituted of non-aggregated particles composed of the single particles or aggregated particles composed of secondary particles obtained by aggregation of primary particles.
(3) The positive electrode for a non-aqueous electrolyte secondary battery according to (2), in which the positive-electrode active material having the unimodal particle-size distribution and contained in the body portion is constituted of the non-aggregated particles having a volume-base median diameter (D50) of 2 to 10 µm, and the positive-electrode active material having the multimodal particle-size distribution and contained in the end portion is constituted of the aggregated particles composed of the secondary particles having a volume-base median diameter (D50) of 10 to 30 µm and obtained by aggregation of the primary particles having an average particle diameter of 50 nm to 5 µm.
(4) The positive electrode for a non-aqueous electrolyte secondary battery according to any one of (1) to (3), in which the positive-electrode active material having the multimodal particle-size distribution and contained in the end portion is a positive-electrode active material having a bimodal particle-size distribution in which a maximum value of one of the peaks in the bimodal particle-size distribution is 1.5 times or more a maximum value of the other peak.
(5) The positive electrode for a non-aqueous electrolyte secondary battery according to any one of (1) to (4), in which a thickness of the end portion is smaller than a thickness of the body portion by 5 to 20 µm.
(6) The positive electrode for a non-aqueous electrolyte secondary battery according to any one of (1) to (5), in which the end portion is provided in either one or both of the end portions of the positive electrode mixture layer in a longitudinal direction.
(7) The positive electrode for a non-aqueous electrolyte secondary battery according to any one of (1) to (6), in which the end portion is provided in either one or both of the end portions of the positive electrode mixture layer in a shorter length direction.
(8) A non-aqueous electrolyte secondary battery comprising the non-aqueous electrolyte secondary battery positive electrode according to any one of (1) to (7).

### REFERENCE SIGNS LIST

- 10: Non-aqueous electrolyte secondary battery
- 11: Positive electrode
- 12: Negative electrode
- 13: Separator
- 14: Electrode assembly
- 16: exterior housing can
- 17: Sealing assembly
- 18, 19: Insulating plate
- 20: Positive electrode lead
- 21: Negative electrode lead
- 22: Groove portion
- 23: Internal terminal plate
- 24: Lower vent member
- 25: Insulating member
- 26: Upper vent member
- 27: Cap
- 28: Gasket
- 30: Positive electrode current collector
- 30a: Positive electrode current collector exposed portion
- 31: Positive electrode mixture layer
- 31a: Body portion
- 31b: End portion

## Claims

1. A positive electrode for a non-aqueous electrolyte secondary battery comprising
a positive electrode current collector, and a positive electrode mixture layer disposed on the positive electrode current collector, wherein
the positive electrode current collector has a positive electrode current collector exposed portion on which the positive electrode mixture layer is not disposed, and
the positive electrode mixture layer has a body portion and an end portion provided closer to the positive electrode current collector exposed portion than the body portion and thinner than the body portion, the body portion contains a positive-electrode active material having a unimodal particle-size distribution, and the end portion contains a positive-electrode active material having a multimodal particle-size distribution.

2. The positive electrode for a non-aqueous electrolyte secondary battery according to claim 1, wherein the positive-electrode active material having the unimodal particle-size distribution and contained in the body portion is constituted of non-aggregated particles composed of the single particles or aggregated particles composed of secondary particles obtained by aggregation of primary particles, and the positive-electrode active material having the multimodal particle-size distribution and contained in the end portion is constituted of non-aggregated particles composed of the single particles or aggregated particles composed of secondary particles obtained by aggregation of primary particles.

3. The positive electrode for a non-aqueous electrolyte secondary battery according to claim 2, wherein the positive-electrode active material having the unimodal particle-size distribution and contained in the body portion is constituted of the non-aggregated particles having a volume-base median diameter (D50) of 2 to 10 µm, and the positive-electrode active material having the multimodal particle-size distribution and contained in the end portion is constituted of the aggregated particles composed of the secondary particles having a volume-base median diameter (D50) of 10 to 30 µm and obtained by aggregation of the primary particles having an average particle diameter of 50 nm to 5 µm.

4. The positive electrode for a non-aqueous electrolyte secondary battery according to any one of claims 1 to 3, wherein the positive-electrode active material having the multimodal particle-size distribution and contained in the end portion is a positive-electrode active material having a bimodal particle-size distribution in which a maximum value of one of the peaks in the bimodal particle-size distribution is 1.5 times or more a maximum value of the other peak.

5. The positive electrode for a non-aqueous electrolyte secondary battery according to any one of claims 1 to 3, wherein a thickness of the end portion is smaller than a thickness of the body portion by 5 to 20 µm.

6. The positive electrode for a non-aqueous electrolyte secondary battery according to any one of claims 1 to 3, wherein the end portion is provided in either one or both of the end portions of the positive electrode mixture layer in a longitudinal direction.

7. The positive electrode for a non-aqueous electrolyte secondary battery according to any one of claims 1 to 3, wherein the end portion is provided in either one or both of the end portions of the positive electrode mixture layer in a shorter length direction.

8. A non-aqueous electrolyte secondary battery comprising the non-aqueous electrolyte secondary battery positive electrode according to any one of claims 1 to 3.
